(19) Europäisches Patentamt / European Patent Office / Office européen des brevets

(11) **EP 4 174 114 A1**

(12) **EUROPEAN PATENT APPLICATION**
published in accordance with Art. 153(4) EPC

(43) Date of publication:
**03.05.2023 Bulletin 2023/18**

(21) Application number: **21831994.5**

(22) Date of filing: **16.06.2021**

(51) International Patent Classification (IPC):
*C08J 3/22* (2006.01)   *C08K 7/22* (2006.01)
*C08L 23/16* (2006.01)   *C08L 101/00* (2006.01)
*C09K 3/00* (2006.01)   *C08J 9/32* (2006.01)

(52) Cooperative Patent Classification (CPC):
**C08J 3/22; C08J 9/32; C08K 7/22; C08L 23/16;
C08L 101/00; C09K 3/00**

(86) International application number:
**PCT/JP2021/022778**

(87) International publication number:
**WO 2022/004369 (06.01.2022 Gazette 2022/01)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **30.06.2020 JP 2020112284**

(71) Applicant: **Matsumoto Yushi-Seiyaku Co., Ltd.
Yao-shi, Osaka 581-0075 (JP)**

(72) Inventors:
• **KITA, Yu**
  **Yao-shi, Osaka 581-0075 (JP)**
• **AOKI, Takayuki**
  **Yao-shi, Osaka 581-0075 (JP)**

(74) Representative: **Global IP Europe
Patentanwaltskanzlei
Pfarrstraße 14
80538 München (DE)**

(54) **MASTERBATCH FOR FOAM MOLDING AND USE THEREOF**

(57) The present invention aims to provide a masterbatch for foam molding which minimally adheres to a molding machine, disperses well in a molding composition and enables the manufacture of lightweight foam-molded products with high foaming ratio and good appearance, and also aims to provide the application thereof.

Provided is a masterbatch for foam molding which contains a base resin and heat-expandable microspheres wherein the base resin contains EPDM and the masterbatch contains the heat-expandable microspheres in an amount ranging from higher than 300 parts by weight to 750 parts by weight to 100 parts by weight of the base resin and has a Moony viscosity ML 1+4 (100 °C) ranging from 15 to 90.

EP 4 174 114 A1

**Description**

[Technical Field]

The present invention relates to a masterbatch for foam molding and application thereof.

[Background Art]

Foamed products including extrusion-molded foamed products and injection-molded foamed products have been manufactured by molding a mixture which is produced by mixing a base material, such as resin pellets or rubber blocks, and a foaming component, such as heat-expandable microspheres (also referred to as heat-expandable microcapsules) or a chemical foaming agent. The foaming component used in the molding, however, is apt to scatter and separate from the mixture with a base material, such as resin pellets, while the mixture is fed to a molding machine. Thus, the base material and foaming component are often premixed and kneaded at a temperature higher than the softening temperature of the base material and lower than the temperature at which the foaming component decomposes or foams in order to produce a masterbatch of a desired shape for foam molding.

In the PTL 1, for example, a base resin essentially containing EPDM and a masterbatch for foam molding which contains 100 parts by weight of the base resin and 40 to 300 parts by weight of heat-expandable microcapsules.

[Citation list]

[Patent Literature]

[PTL 1] Japanese Patent 6523576

[Summary of Invention]

[Technical Problem]

In a foam-molding process with the masterbatch described in PTL 1, the molding composition is required to contain high ratio of the masterbatch for the purpose of manufacturing foamed products of high foaming ratio. As a result, the masterbatch sometimes adhere to screws and rolls in a molding machine to cause nonuniform foaming and variable specific gravity of the resultant molded products and require additional work to remove the adhered masterbatch on the machinery surface. In addition, the high ratio of the masterbatch impairs the surface property and physical properties of the resultant molded products and causes poor dispersion of the masterbatch in the molding composition.

No masterbatches for foam molding have satisfied the requirements of minimized adhesion on a molding machine and excellent dispersion in a molding composition and have enabled the manufacture of lightweight foam-molded products with high foaming ratio and good appearance.

The present invention aims to provide a masterbatch for foam molding which minimally adheres to a molding machine, disperses well in a molding composition and enables the manufacture of lightweight foam-molded products with high foaming ratio and good appearance, and also aims to provide the application thereof.

[Solution to Problem]

The inventors of the present invention diligently studied to solve the problem mentioned above and have found that a masterbatch for foam molding which contains a specific amount of a specific base resin and a specific amount of a specific heat-expandable microspheres and has a specific performance is able to solve the problem mentioned above to achieve the present invention.

The present invention provides a masterbatch for foam molding which contains a base resin and heat-expandable microspheres wherein the base resin contains EPDM and the masterbatch contains the heat-expandable microspheres in an amount ranging from higher than 300 parts by weight to 750 parts by weight to 100 parts by weight of the base resin and has a Moony viscosity ML 1+4 (100 °C) ranging from 15 to 90.

The EPDM contained in the masterbatch for foam molding of the present invention should preferably contain 45 wt% to 72 wt% of ethylene.

The EPDM contained in the masterbatch for foam molding of the present invention should preferably contain 2.2 wt% to 10.0 wt% of diene.

The masterbatch for foam molding of the present invention should preferably contain heat-expandable microspheres containing a thermoplastic resin shell and a thermally vaporizable blowing agent encapsulated therein, wherein the thermoplastic resin is a polymer of a polymerizable component containing at least one selected from the group consisting of acrylonitrile, methacrylonitrile and vinylidene chloride.

The method of the producing for a masterbatch for foam molding of the present invention includes a step of mixing a material 1 containing a base resin and a liquid chemical compound and a material 2 containing heat-expandable microspheres wherein the base resin contains EPDM, and the masterbatch contains the heat-expandable microspheres in an amount ranging from higher than 300 parts by weight to 750 parts by weight to 100 parts by weight of the base resin and has a Moony viscosity ML1+4 (100 °C) ranging from 15 to 90.

The resin composition of the present invention contains the masterbatch for foam molding and a matrix resin. The foam-molded product of the present invention is manufactured by molding the resin composition.

[Advantageous Effects of Invention]

The masterbatch for foam molding of the present invention minimally adheres to a molding machine, disperses well in a molding composition and enables the manufacture of a lightweight foam-molded product with high foaming ratio and good appearance.

The method for producing a masterbatch for foam molding of the present invention enables the production of a masterbatch for foam molding which minimally adheres to a molding machine, disperses well in a molding composition and enables the manufacture of a lightweight foam-molded product with high foaming ratio and good appearance.

The resin composition of the present invention contains the masterbatch for foam molding to enable the manufacture of a lightweight foam-molded product with high foaming ratio, good appearance and minimum unevenness in foaming.

The foam-molded product of the present invention is lightweight and has high foaming ratio and good appearance with minimum unevenness in foaming.

[Description of Embodiments]

The masterbatch for foam molding of the present invention (hereinafter sometimes referred to as the masterbatch) contains a base resin and heat-expandable microspheres. The components of the masterbatch are explained in detail as follows.

Base resin

The base resin contained in the masterbatch for foam molding of the present invention contains EPDM (ethylene-propylene-diene copolymer rubber). Thus the base resin achieves good dispersion of the masterbatch and enables the manufacture of a foam-molded product with minimum unevenness in foaming.

The content of ethylene in the EPDM (the amount of ethylene constituting the EPDM) is not specifically restricted and should preferably range from 45 wt% to 72 wt%. The EPDM containing at least 45 wt% of ethylene can minimize uneven foaming of the resultant foam-molded products. On the other hand, the EPDM containing 72 wt% or lower amount of ethylene can improve the dispersibility of the resultant masterbatch. The upper limit of the content of ethylene in the EPDM should preferably be 70 wt%, more preferably 67 wt%, and further more preferably 65 w%. On the other hand, the lower limit of the content of ethylene in the EPDM should preferably be 47 wt%, more preferably 50 wt%, and further more preferably 55 w%.

The content of propylene in the EPDM (the amount of propylene constituting the EPDM) is not specifically restricted and should preferably range from 20 wt% to 45 wt%.

The diene contained in the EPDM (the diene constituting the EPDM) is not specifically restricted and includes, for example, 1,4-hexadiene, 3-methyl-1,4-hexadiene, 4-methyl-1,4-hexadiene, 5-methyl-1,4-hexadiene, 4,5-dimethyl-1,4-hexadiene, 7-methyl-1,6-octadiene, 8-methyl-4-ethylidene-1,7-nonadiene, 4-ethylidene-1,7-undecadiene, methyltetrahydro-indene, 5-ethylidene-2-norbornene, 5-methylene-2-norbornene, 5-n-propylidene-2-norbornene, 5-isopropylidene-2-norbornene, 5-vinylidene-2-norbornene, 6-chloromethyl-5-isopropenyl-2-norbornene, 5-vinyl-2-norbornene, 5-isopropenyl-2-norbornene, 5-isobutenyl-2-norbornene, dicyclopentadiene and norbornadiene. Of those dienes, 1,4-hexadiene, 5- ethylidene-2-norbornene and dicyclopentadiene are preferable.

The content of diene in the EPDM (the amount of diene constituting the EPDM) is not specifically restricted and should preferably range from 2.2 wt% to 10 wt%. The content of diene in the EPDM within the above range can contribute to improved moldability of the resin composition containing the resultant masterbatch. The upper limit of the content of diene in the EPDM should preferably be 9.5 wt%, more preferably 9.0 wt% and further more preferably 8 wt%. On the other hand, the lower limit of the content of diene in the EPDM should preferably be 3 wt%, more preferably 3.5 wt% and further more preferably 4.5 wt%.

The ratio between the content of ethylene and the content of diene in the EPDM (ethylene: diene ratio) is not specifically restricted and should preferably range from 80:20 to 98:2 and more preferably from 85:15 to 96:4.

The Mooney viscosity ML1+4 (100 °C) of the EPDM (hereinafter sometimes simply referred to as the Mooney viscosity of the EPDM) is not specifically restricted and should preferably range from 5 to 80. The EPDM having a Mooney viscosity of 5 or higher can improve the stability of producing the masterbatch for foam molding. On the other hand, the EPDM having a Mooney viscosity of 80 or lower can improve the handling property of the masterbatch for foam molding. The upper limit of the Mooney viscosity of the EPDM should preferably be 75, more preferably 70 and further more preferably 65. On the other hand, the lower limit of the Mooney viscosity of the EPDM should preferably be 10, more preferably 15 and further more preferably 20.

The "Mooney viscosity ML1+4 (100 °C)" mentioned in the present application is a value which indicates the viscosity determined by the method according to JIS K-6300. In the phrase of "ML1+4 (100 °C)", "M" denotes Mooney, "L" denotes the roter shape, "1+4" means 1-minute preheating and 4-minute rotation of the rotor, and "(100 °C)" means the preheating temperature.

The base resin can be the EPDM or a mixture of the EPDM and other resins. The content of the EPDM in the base resin is not specifically restricted and should preferably range from 75 wt% to 100 wt%, more preferably 85 wt% to 100 wt% and further more preferably 90 wt% to 100 wt%.

If the base resin contains a resin other than the EPDM, such resin includes, for example, rubbers such as ethylene-propylene rubber (EPR), natural rubber (NR), butadiene rubber (BR), styrene-butadiene rubber (SBR), isoprene rubber (IR), acrylonitrile-butadiene rubber (NBR), butyl rubber (IIR), chloroprene rubber (CR), acrylic rubber, urethane rubber and silicone rubber; thermoplastic resins, such as polyvinyl chloride, polypropylene, modified polypropylene, polypropylene oxide, polyethylene, low-density polyethylene, high-density polyethylene, modified polyethylene, ethylene-vinyl acetate copolymer (EVA), polystyrene, polybutylene terephthalate, nylon, polycarbonate, and polyethylene terephthalate; ionomer resins, such as ethylene ionomers, urethane ionomers, styrene ionomers and fluorine ionomers; and thermoplastic elastomers, such as olefin elastomers, styrene elastomers and polyester elastomers. One of or a combination of at least two of the resins can be used.

The specific gravity of the base resin is not specifically restricted and should preferably range from 0.80 to 1.0. A base resin having a specific gravity within the range can contribute to uniform specific gravity of the resultant molded products. The upper limit of the specific gravity of the base resin should preferably be 0.98 and more preferably 0.96. The lower limit of the specific gravity of the base resin should preferably be 0.82 and more preferably 0.85.

The content of the base resin in the masterbatch for foam molding of the present invention is not specifically restricted and should preferably range from 20 wt% to 65 wt%. If the content of the base resin is lower than 20 wt%, the masterbatch cannot be produced. On the other hand, if the content of the base resin is higher than 65 wt%, the resultant masterbatch can adhere to a molding machine.

Heat-expandable microspheres

The masterbatch for foam molding of the present invention contains heat-expandable microspheres.

The heat-expandable microspheres contain a thermoplastic resin shell and a thermally vaporizable blowing agent encapsulated therein as a core. The heat-expandable microspheres have a core-shell structure and each of the heat-expandable microsphere is thermally expandable as a whole (the whole of a heat-expandable microsphere expands by heating).

The thermoplastic resin constituting the shell of the heat-expandable microspheres is a polymer obtained by polymerizing a polymerizable component. The polymerizable component contains a monomer component and can optionally contain a crosslinking agent. The monomer component means a monomer having a (radically) polymerizable carbon-carbon double bond per molecule and can be polymerized by addition polymerization. The crosslinking agent means a monomer having at least two (radically) polymerizable carbon-carbon double bonds per molecule and introduces a crosslinked structure in the resultant thermoplastic resin.

The monomer component is not specifically restricted and includes, for example, nitrile monomers, such as acrylonitrile, methacrylonitrile, fumaronitrile and maleonitrile; vinyl halide monomers, such as vinyl chloride; vinylidene halide monomers, such as vinylidene chloride; vinyl ester monomers, such as vinyl acetate, vinyl propionate and vinyl butyrate; carboxyl-group-containing monomers, such as unsaturated monocarboxylic acids including acrylic acid, methacrylic acid, ethacrylic acid, crotonic acid and cinnamic acid, unsaturated dicarboxylic acids including maleic acid, itaconic acid, fumaric acid, citraconic acid and chloromaleic acid, anhydrides of unsaturated dicarboxylic acids, and monoesters of unsaturated dicarboxylic acids including monomethyl maleate, monoethyl maleate, monobutyl maleate, monomethyl fumarate, monoethyl fumarate, monomethyl itaconate, monoethyl itaconate and monobutyl itaconate; (meth)acrylate monomers, such as methyl (meth)acrylate, ethyl (meth)acrylate, n-butyl (meth)acrylate, t-butyl (meth)acrylate, 2-ethylhexyl (meth)acrylate, stearyl (meth)acrylate, phenyl (meth)acrylate, isobornyl (meth)acrylate, cyclohexyl (meth)acrylate, benzyl (meth)acrylate, and 2-hydroxyethyl (meth)acrylate; (meth)acrylamide monomers, such as acrylamide, substituted acrylamide, methacrylamide and substituted methacrylamide; maleimide monomers, such as N-phenyl maleimide and N-cyclohexyl maleimide; styrene monomers, such as styrene and α-methyl styrene; ethylenically unsaturated monoolefin monomers, such as ethylene, propylene, and isobutylene; vinyl ether monomers, such as vinyl methyl ether, vinyl ethyl ether and vinyl isobutyl ether; vinyl ketone monomers, such as vinyl methyl ketone; N-vinyl monomers, such as N-vinyl carbazole and N-vinyl pyrolidone; and vinyl naphthalene salts. A part of or the whole of the carboxyl groups of the carboxyl-group-containing monomers can be neutralized during or after the polymerization.

The acrylic acid and methacrylic acid can be collectively referred to as (meth)acrylic acids and the acrylate and methacrylate can be collectively referred to as (meth)acrylates. The word, (meth)acrylate, means acrylate or methacrylate and the word, (meth)acryl, means acryl or methacryl. One of or a combination of at least two of the monomers mentioned above can be used.

The monomer component containing a nitrile monomer or vinylidene halide monomer is preferable because such monomer component improves the gas barrier effect of the shell of the resultant heat-expandable microspheres. The monomer component containing at least one monomer selected from the group consisting of acrylonitrile, methacrylonitrile and vinylidene chloride further improves the gas barrier effect.

If the monomer component (polymerizable component) contains at least one monomer selected from the group consisting of acrylonitrile (AN), methacrylonitrile (MAN) and vinylidene chloride, the total amount of the acrylonitrile, methacrylonitrile and vinylidene chloride in the polymerizable component is not specifically restricted and should preferably range from 30 wt% to 100 wt%. If the total amount of the acrylonitrile, methacrylonitrile and vinylidene chloride is lower than 30 wt%, the shell of the resultant heat-expandable microspheres can have poor gas barrier effect. The upper limit of the total amount of the acrylonitrile, methacrylonitrile and vinylidene chloride in the polymerizable component should preferably be 99.9 wt%, more preferably 99.5 wt%, and further more preferably 98.5 wt%. On the other hand, the lower limit of the total amount of the acrylonitrile, methacrylonitrile and vinylidene chloride in the polymerizable component should preferably be 40 wt%, more preferably 50 wt%, and further more preferably 55 wt%.

The ratio by weight of the AN and MAN (AN:MAN) contained in the monomer component is not specifically restricted and should preferably range from 1:99 to 100:0, more preferably from 5:95 to 95:5, further more preferably from 10:90 to 90:10, yet further more preferably from 30:70 to 85:15 and most preferably from 50:50 to 80:20. The ratio by weight of the AN and MAN within the range contributes to dense shell and improved gas barrier effect of the resultant heat-expandable microspheres.

The monomer component should preferably contain a carboxyl-containing monomer to attain high heat resistance and good solvent resistance of the resultant heat-expandable microspheres. Acrylic acid and methacrylic acid are preferable carboxyl-containing monomers for their ready availability and improved heat-resistance of the resultant heat-expandable microspheres.

If the monomer component contains a carboxyl-group-containing monomer, the amount of the carboxyl-group-containing monomer in the polymerizable component is not specifically restricted and should preferably range from 10 wt% to 70 wt%. A polymerizable component containing a carboxyl-group-containing monomer in an amount lower than 10 wt% can cause insufficiently improved heat resistance of the resultant heat-expandable microspheres. On the other hand, a polymerizable component containing a carboxyl-group-containing monomer in an amount higher than 70 wt% can decrease the gas barrier effect of the resultant heat-expandable microspheres. The upper limit of the amount of the carboxyl-group-containing monomer in the polymerizable component should preferably be 60 wt%, more preferably 50 wt%, further more preferably 45 wt% and most preferably 40 wt%. On the other hand, the lower limit of the amount of the carboxyl-group-containing monomer in the polymerizable component should preferably be 15 wt%, more preferably 20 wt%, further more preferably 25 wt% and most preferably 30 wt%.

If the monomer component contains both nitrile monomer and carboxyl-group-containing monomer, the total amount of the nitrile monomer and carboxyl-group-containing monomer in the monomer component should preferably be at least 50 wt%, more preferably at least 60 wt%, further more preferably at least 70 wt%, yet further more preferably at least 80 wt% and most preferably at least 90 wt%, though the amount is not specifically restricted.

The amount of the carboxyl-group-containing monomer in the total amount of the nitrile monomer and carboxyl-containing monomer is not specifically restricted and should preferably range from 10 wt% to 70 wt%. If the amount of the carboxyl-group-containing monomer in the total amount is lower than 10 wt%, the resultant heat-expandable microspheres can have insufficiently improved heat resistance and solvent resistance. On the other hand, if the amount of the carboxyl-group-containing monomer in the total amount is higher than 70 wt%, the resultant heat-expandable microspheres can have poor expansion performance. The upper limit of the amount of the carboxyl-containing monomer in the total amount of the nitrile monomer and carboxyl-group-containing monomer should preferably be 60 wt%, more preferably 50 wt%, further more preferably 45 wt% and most preferably 40 wt%. On the other hand, the lower limit of the amount of the carboxyl-group-containing monomer in the total amount of the nitrile monomer and carboxyl-containing monomer should preferably be 15 wt%, more preferably 20 wt%, further more preferably 25 wt% and most preferably 30 wt%.

If the monomer component contains a carboxyl-group-containing monomer, the surface of the resultant heat-expandable microspheres can be treated with a chemical compound which reacts with the carboxyl groups. The chemical compound which reacts with the carboxyl groups is not specifically restricted and includes, for example, metal-containing organic compounds, epoxy resins and silane coupling agents.

The monomer component containing a (meth)acrylate monomer or styrene monomer enables easy adjustment of the expansion performance of the resultant heat-expandable microspheres. The polymerizable component containing a (meth)acrylamide monomer as the monomer component improves the heat resistance of the resultant heat-expandable microspheres.

If the monomer component contains at least one monomer selected from the group consisting of acrylate monomers, (meth)acrylamide monomers and styrene monomers, the total amount of the acrylate monomers, (meth)acrylamide monomers and styrene monomers in the polymerizable component is not specifically restricted and should preferably be 50 wt% or lower, more preferably 35 wt% or lower and further more preferably 10 wt% or lower. The polymerizable component containing the acrylate monomers, (meth)acrylamide monomers and styrene monomers in a total amount higher then 50 wt% can cause poor heat resistance of the resultant heat-expandable microspheres.

The polymerizable component can contain a crosslinking agent as mentioned above. Polymerization with the crosslinking agent minimizes the decrease of the retention (retention ratio) of the encapsulated blowing agent after thermal expansion of the resultant heat-expandable microspheres to attain efficient thermal expansion of the microspheres.

The crosslinking agent is not specifically restricted, and includes, for example, aromatic divinyl compounds, such as divinylbenzene; and di(meth)acrylate compounds, such as allyl methacrylate, triacrylformal, triallyl isocyanate, ethylene glycol di(meth)acrylate, diethylene glycol di(meth)acrylate, triethylene glycol di(meth)acrylate, 1,4-butanediol di(meth)acrylate, 1,6-hexanediol di(meth)acrylate, 1,9-nonanediol di(meth)acrylate, 1,10-decanediol di(meth)acrylate, PEG (200) di(meth)acrylate, PEG (400) di(meth)acrylate, PEG (600) di(meth)acrylate, PPG (400) di(meth)acrylate, PPG (700) di(meth)acrylate, trimethylolpropane trimethacrylate, EO-modified trimethylolpropane trimethacrylate, glycerin dimethacrylate, dimethylol-tricyclodecane diacrylate, pentaerythritol tri(meth)acrylate, pentaerythritol tetraacrylate, dipentaerythritol hexaacrylate, 2-butyl-2-ethyl-1,3-propanediol diacrylate, tris(2-acryloyloxiethyl) isocyanurate, triallyl isocyanurate, triallyl cyanurate, triglycidyl isocyanurate, polytetramethyleneglycol dimethacrylate, EO-modified bisphenol A dimethacrylate, neopentylglycol dimethacrylate, nonanediol diacrylate, trimethylolpropane tri(meth)acrylate and 3-methyl-1.5 pentanediol diacrylate. One of or a combination of at least two of those crosslinking agents can be used.

The amount of the crosslinking agent is not specifically restricted and should preferably range from 0.01 parts by weight to 6 parts by weight, more preferably from 0.05 parts by weight to 3 parts by weight and further more preferably from 0.1 parts by weight to 1 part by weight to 100 parts by weight of the monomer component, considering the degree of crosslinking, retention ratio of the blowing agent encapsulated in the shell, and the heat resistance and thermal expansion performance of the resultant heat-expandable microspheres.

The blowing agent contained in the heat-expandable microspheres is not specifically restricted if it is thermally vaporizable, and includes, for example, $C_3$-$C_{13}$ hydrocarbons such as propane, (iso)butane, (iso)pentane, (iso)hexane, (iso)heptane, (iso)octane, (iso)nonane, (iso)decane, (iso)undecane, (iso)dodecane and (iso)tridecane; hydrocarbons having a carbon number greater than 13 and not greater than 20, such as (iso)hexadecane and (iso)eicosane; hydrocarbons from petroleum fractions such as pseudocumene, petroleum ether, and normal paraffins and isoparaffins having an initial boiling point ranging from 150 °C to 260 °C and/or being distilled at a temperature ranging from 70 °C to 360 °C; their halides; fluorine-containing compounds, such as hydrofluoroether; tetraalkyl silane; and compounds which thermally decompose to generate gases. One of or a combination of at least two of those blowing agents can be used. The aforementioned blowing agents can be any of linear, branched or alicyclic compounds, and should preferably be aliphatic compounds.

The blowing agent is a thermally vaporizable substance and the blowing agent to be encapsulated in heat-expandable microspheres should preferably have a boiling point not higher than the softening point of the thermoplastic resin of the microspheres because such blowing agent can generate sufficiently high vapor pressure for expanding the microspheres at their expansion temperature and attain high expansion ratio of the microspheres. Of those blowing agents mentioned above, a hydrocarbon of 8 or lower carbon number should preferably be contained in the blowing agent of the heat-expandable microspheres to attain high expansion performance of the microspheres.

The blowing agent can also contain a substance having a boiling point higher than the softening point of the thermoplastic resin of the heat-expandable microspheres. The amount of such substance, which has a boiling point higher than the softening point of the thermoplastic resin, in the blowing agent is not specifically restricted and should preferably be 95 wt% or lower, more preferably 80 wt% or lower, further more preferably 70 wt% or lower, yet further more preferably 65 wt% or lower, still further more preferably 50 wt% or lower and most preferably 30 wt% or lower. The amount of the substance having a boiling point higher than the softening point of the thermoplastic resin can be higher than 95 wt%, though such amount can increase the maximum expansion temperature of the resultant heat-expandable microspheres to decrease their expansion ratio.

The encapsulation ratio of the blowing agent in the heat-expandable microspheres is defined as the weight percentage of the blowing agent encapsulated in the heat-expandable microspheres to the weight of the heat-expandable microspheres. The encapsulation ratio of the blowing agent in heat-expandable microspheres should preferably range from 1 wt% to 50 wt%, more preferably from 2 wt% to 40 wt%, and most preferably from 3 wt% to 30 wt%, though the encapsulation ratio is not specifically restricted and selected according to the application of the heat-expandable microspheres. An encapsulation ratio of the blowing agent lower than 1 wt% can lead to insufficient effect by the blowing agent. On the other hand, an encapsulation ratio of the blowing agent higher than 50 wt% can thin the shell of the heat-expandable microspheres to make the blowing agent escape through the shell and impair the heat resistance and expansion performance of the microspheres.

The mean particle size of the heat-expandable microspheres is not specifically restricted and should preferably range from 1 pm to 200 pm. Heat-expandable microspheres having a mean particle size within the range can contribute to the manufacture of molded products which are lightweight and have good appearance. The upper limit of the mean particle size of the heat-expandable microspheres should preferably be 100 pm, more preferably 75 pm, further more preferably 50 pm and most preferably 45 pm. On the other hand, the lower limit of the mean particle size of the heat-expandable microspheres should preferably be 3 pm, more preferably 5 pm, further more preferably 8 pm and most preferably 10 pm.

The mean particle size of the heat-expandable microspheres is determined in the method described in Example.

The coefficient of variation, CV, of the particle size distribution of the heat-expandable microspheres is not specifically restricted, and should preferably be not greater than 50 %, more preferably not greater than 40 %, and most preferably not greater than 30 %. The CV can be calculated by the following formulae (1) and (2).

[Formulae 1]

$$CV = (s \, / <x>) \times 100 \, (\%) \qquad (1)$$

$$s = \{ \sum_{i=1}^{n} (xi - <x>)^2 \, / \, (n-1) \}^{1/2} \qquad (2)$$

(where s is a standard deviation of the particle size of the microspheres, <x> is a mean particle size of the microspheres, "xi" is the particle size of the i-th particle, and n represents the number of particles)

The expansion-starting temperature ($T_s$) of the heat-expandable microspheres is not specifically restricted and should preferably range from 60 °C to 250 °C. Heat-expandable microspheres having an expansion-starting temperature lower than 60 °C can have poor storage stability to exhibit nonuniform expansion ratio when used for resin molding. On the other hand, heat-expandable microspheres having an expansion-starting temperature higher than 250 °C can exhibit insufficient expansion performance due to their excessive heat resistance. The upper limit of the expansion-starting temperature of the heat-expandable microspheres should preferably be 230 °C, more preferably 200 °C, further more preferably 180 °C and most preferably 170 °C. On the other hand, the lower limit of the expansion-starting temperature of the heat-expandable microspheres should preferably be 70 °C, more preferably 80 °C, further more preferably 90 °C and most preferably 100 °C.

The maximum expansion temperature ($T_{max}$) of the heat-expandable microspheres is not specifically restricted and should preferably range from 80 °C to 350 °C. Heat-expandable microspheres having a maximum expansion temperature lower than 80 °C cannot be used for resin molding. On the other hand, heat-expandable microspheres having a maximum expansion temperature higher than 350 °C can exhibit insufficient expansion performance due to their excessive heat resistance. The upper limit of the maximum expansion temperature of the heat-expandable microspheres should preferably be 280 °C, more preferably 250 °C, further more preferably 230 °C and most preferably 210 °C. On the other hand, the lower limit of the maximum expansion temperature of the heat-expandable microspheres should preferably be 90 °C, more preferably 100 °C, further more preferably 110 °C and most preferably 120 °C.

The expansion-starting temperature and maximum expansion temperature of the heat-expandable microspheres are determined in the methods described in Example.

The roundness of each heat-expandable microsphere is not specifically restricted and should preferably be 0.995 or lower. Heat-expandable microspheres each of which has a roundness of higher than 0.995 cannot be uniformly dispersed in a base resin. The upper limit of the roundness of the heat-expandable microspheres should preferably be 0.985, more preferably 0.975 and most preferably 0.965. On the other hand the lower limit of the roundness of the heat-expandable microspheres should preferably be 0.50.

The heat-expandable microspheres are usually obtained by the method including the steps of dispersing an oily mixture containing the polymerizable component and blowing agent mentioned above in an aqueous dispersion medium and polymerizing the polymerizable component. The polymerizable component should preferably be polymerized in the presence of a polymerization initiator.

The polymerization initiator is not specifically restricted and includes peroxides and azo compounds generally used.

The peroxides include, for example, peroxidicarbonates, such as diisopropyl peroxydicarbonate, di-sec-butyl peroxydicarbonate, di-2-ethylhexyl peroxydicarbonate and dibenzyl peroxydicarbonate; diacyl peroxides, such as lauroyl peroxide and benzoyl peroxide; ketone peroxides, such as methylethylketone peroxide and cyclohexanone peroxide; peroxyketals, such as 2,2-bis(t-butylperoxy) butane; hydroperoxides, such as cumene hydroperoxide and t-butyl hydroperoxide; dialkyl peroxides, such as dicumyl peroxide and di-t-butyl peroxide; and peroxyesters, such as t-hexyl peroxypivalate and t-butyl peroxyisobutylate.

The azo compound includes, for example, 2,2'-azobis(4-methoxy-2,4-dimethyl valeronitrile), 2,2'-azobisisobutylonitrile, 2,2'-azobis(2,4-dimethyl valeronitrile), 2,2'-azobis(2-methyl propionate), 2,2'-azobis(2-methyl butylonitrile) and 1,1'-azobis(cyclohexane-1-carbonitrile).

The amount of the polymerization initiator is not specifically restricted, and should preferably range from 0.05 wt% to 10 wt%, more preferably from 0.1 wt% to 8 wt% and further more preferably from 0.2 wt% to 5 wt% to 100 parts by weight of the polymerizable component.

The aqueous dispersion medium, in which the oily mixture is dispersed, contains water, such as deionized water, as the main component, and can further contain alcohols, such as methanol, ethanol and propanol, and hydrophilic organic solvents, such as acetone. The hydrophilic property mentioned in the present invention means the property of a substance optionally miscible in water. The amount of the aqueous dispersion medium used in the process is not specifically restricted, and should preferably range from 100 parts by weight to 1000 parts by weight to 100 parts by weight of the polymerizable component.

The aqueous dispersion medium can further contain an electrolyte, such as sodium chloride, magnesium chloride, calcium chloride, sodium sulfate, magnesium sulfate, ammonium sulfate, and sodium hydroxide. One of or a combination of at least two of these electrolyte can be used. The amount of the electrolyte is not specifically restricted, and should preferably range from 0.1 parts by weight to 50 parts by weight to 100 parts by weight of the aqueous dispersion medium.

The aqueous dispersion medium can contain at least one water-soluble compound selected from the group consisting of potassium dichromate, alkali metal nitrite salts, metal (III) halides, boric acid, water-soluble ascorbic acids, water-soluble polyphenols, water-soluble vitamin Bs, water-soluble phosphonic acids and phosphonate salts, and water-soluble 1,1-substitution compounds having a carbon atom bonded with a hetero atom and with a hydrophilic functional group selected from the group consisting of hydroxyl group, carboxylic acid (salt) groups and phosphonic acid (salt) groups. The term "water-soluble" in the present invention means that at least 1 g of a substance is soluble in 100 g of water.

The amount of the water-soluble compound contained in the aqueous dispersion medium is not specifically restricted, and should preferably range from 0.0001 parts by weight to 1.0 part by weight to 100 parts by weight of the polymerizable component, more preferably from 0.0003 parts by weight to 0.1 parts by weight, and most preferably from 0.001 parts by weight to 0.05 parts by weight.

The aqueous dispersion medium can contain a dispersion stabilizer or dispersion stabilizing auxiliary in addition to the electrolytes and water-soluble compounds.

The dispersion stabilizer is not specifically restricted, and includes, for example, calcium triphosphate, magnesium pyrophosphate and calcium pyrophosphate produced by double reaction, colloidal silica, alumina sol and magnesium hydroxide. One of or a combination of at least two of those dispersion stabilizers can be used.

The amount of the dispersion stabilizer should preferably range from 0.1 parts by weight to 30 parts by weight to 100 parts by weight of the polymerizable component and more preferably from 0.5 parts by weight to 20 parts by weight.

The dispersion stabilizing auxiliary is not specifically restricted, and includes, for example, polymeric dispersion stabilizing auxiliaries; and surfactants, such as cationic surfactants, anionic surfactants, amphoteric surfactants and nonionic surfactants. One of or a combination of at least two of those dispersion stabilizing auxiliaries can be used.

The aqueous dispersion medium is prepared, for example, by mixing water-soluble compounds and dispersion stabilizers and/or dispersion stabilizing auxiliaries, which are selected optionally, with water (deionized water). The pH of the aqueous dispersion medium during the polymerization is adjusted according to the types of the water-soluble compounds, dispersion stabilizers and dispersion stabilizing auxiliaries.

The heat-expandable microspheres can be produced in a process where the polymerization is carried out in the presence of sodium hydroxide or in the presence of sodium hydroxide and zinc chloride.

The oily mixture should preferably be dispersed and suspended in the aqueous dispersion medium to be formed into oil globules of prescribed particle size in the production of the heat-expandable microspheres.

The methods for dispersing and suspending the oily mixture include generally known dispersion methods, such as agitation with a Homo-mixer (for example, a device manufactured by Primix Corporation), dispersion with a static dispersing apparatus such as a Static mixer (for example, a device manufactured by Noritake Engineering Co., Ltd.), suspending with membrane, and ultrasonic dispersion.

Then suspension polymerization is started by heating the dispersion in which the oily mixture is dispersed into oil globules in the aqueous dispersion medium. During the polymerization reaction, the dispersion should preferably be agitated gently to prevent the floating of monomers and sedimentation of polymerized heat-expandable microspheres.

The polymerization temperature can be settled optionally depending on the variant of the polymerization initiator, and should preferably be controlled within the range from 30 °C to 100 °C, and more preferably from 40 °C to 90 °C. The polymerization temperature should preferably be maintained for about 1 to 20 hours. The initial pressure for the polymerization is not specifically restricted, and should preferably be controlled within the range from 0 MPa to 5.0 MPa in gauge pressure, and more preferably from 0.1 MPa to 3.0 MPa.

The masterbatch for foam molding of the present invention can contain a liquid compound. The liquid compound is preferable for improving the dispersibility of the heat-expandable microspheres. In addition, it is preferable that the liquid compound does not dissolve or swell the thermoplastic resin constituting the shell of the heat-expandable microspheres.

The liquid compound is not specifically restricted and includes, for example, plasticizers, such as dibutyl phthalate, diisooctyl phthalate, diisononyl phthalate, dioctyl adipate, tricresyl phosphate, triethyl citrate, acetyl tributyl citrate and octyl alcohol; nonionic surfactants; polyhydric alcohols, such as alkylene glycol, polyalkylene glycol and glycerin; process oils; silicone oils; liquid paraffins; naphthenic oils; aromatic oils; vegetable oils, such as palm oil, soybean oil, rapeseed oil, sunflower oil, corn oil and linseed oil; and other oils and fats. One of or a combination of those liquid compounds can be used.

The boiling point of the liquid compound is not specifically restricted and should preferably range from 80 °C to 300 °C, more preferably from 90 °C to 270 °C and further more preferably from 100 °C to 250 °C. The liquid compound having a boiling point within the range results in minimum evaporation from the masterbatch during storage.

The content of the liquid compound in the masterbatch for foam molding is not specifically restricted and should preferably range from 70 parts by weight to 1000 parts by weight to 100 parts by weight of the base resin. The content of the liquid compound lower than 70 parts by weight can decrease the dispersibility of the heat-expandable microspheres. On the other hand, the content of the liquid compound higher than 1000 parts by weight can impair the handling property of the masterbatch. The upper limit of the content of the liquid compound should preferably be 800 parts by weight or lower, more preferably 600 parts by weight or lower and further more preferably 500 parts by weight or lower. The lower limit of the content of the liquid compound should be preferable in the order of (1) higher than 100 parts by weight, (2) not lower than 150 parts by weight, (3) higher than 200 parts by weight, (4) not lower than 205 parts by weight and (5) not lower than 250 parts by weight (where greater number indicates more preferable lower limit).

If the masterbatch for foam molding contains the liquid compound, the EPDM contained in the base resin can be an oil-extended EPDM.

The masterbatch for foam molding of the present invention can contain a lubricant. The lubricant is not specifically restricted so far as it softens or melts at the temperature of producing the masterbatch or molding a product. The lubricant include, for example, fatty acid lubricants, such as stearic acid; fatty acid amide lubricants, such as stearic acid amide; ester lubricants, such as butyl stearate; compounds of alcohols, such as stearyl alcohol, and mixtures of such compounds; and metal soaps.

The masterbatch for foam molding of the present invention can contain a chemical foaming agent. The chemical foaming agent includes, for example, inorganic foaming agents, such as sodium hydrogen carbonate; and organic foaming agents, such as azodicarbonamide, N,N'-dinitrosopentamethylenetetramine, p,p'-oxybis-benzenesulfonyl-hydrazide and p-toluenesulfonyl-hydrazide.

The masterbatch for foam molding of the present invention can contain a stabilizer, filler, pigment and liquid rubber which are not specifically restricted so far as those ingredients do not inhibit the effect of the invention.

The stabilizer includes, for example, phenolic stabilizers, such as pentaerythritol tetrakis[3-(3,5-di-tert-butyl-4-hydroxyphenyl)propionate] and triethyleneglycol-bis-[3-(3-t-butyl-5-methyl-4-hydroxyphenyl)propionate]; phosphatic stabilizers, such as tris(mononanylphenyl)phosphite and tris(2,4-di-t-butylphenyl)phosphite; and sulfuric stabilizers, such as dilauroyl dipropionate.

The fillers include, for example, inorganic fillers, such as calcium carbonate, light calcium carbonate, heavy calcium carbonate, magnesium carbonate, talc, clay, glass beads and glass balloons; and organic fillers, such as high-styrene resin, coumarone-indene resin, phenolic resin, lignin, modified melamine resin and petroleum resin.

The pigments include, for example, inorganic pigments, such as titanium dioxide, zinc oxide, ultramarine, colcothar, lithopone, lead, cadmium, iron, cobalt, aluminum, and carbon black; and organic pigments, such as azo pigments, phthalocyanine pigments, quinacridone pigments, quinacridone quinone pigments, dioxane pigments, anthrapyrimidine pigments, anthanthrone pigments, indanthrone pigments, flavanthrone pigments, perylene pigments, perinone pigments, diketopyrrolopyrrole pigments, quinonaphthalone pigments, anthraquinone pigments, thioindigo pigments, benzimidazolone pigments, and isoindolin pigments.

The liquid rubber includes, for example, liquid polybutadiene and its modified products.

Masterbatch for foam molding and production method thereof

The masterbatch for foam molding of the present invention contains heat-expandable microspheres and a base resin containing EPDM, and the amount of the heat-expandable microspheres in the masterbatch ranges from higher than 300 parts by weight to 750 parts by weight to 100 parts by weight of the base resin.

The masterbatch containing 300 parts by weight or lower amount of the heat-expandable microspheres adheres to a molding machine. On the other hand, the masterbatch containing the heat-expandable microspheres in an amount higher than 750 parts by weight results in poor dispersion of the heat-expandable microspheres and poor foaming of the molded products. The upper limit of the amount of the heat-expandable microspheres should preferably be 730 parts by weight, more preferably 700 parts by weight, further more preferably 680 parts by weight, yet further more preferably 650 parts by weight and most preferably 600 parts by weight. On the other hand, the lower limit of the amount of the heat-expandable microspheres should preferably be 301 parts by weight, more preferably 305 parts by weight, further more preferably 310 parts by weight, yet further more preferably 325 parts by weight and most preferably 350 parts by weight.

The Mooney viscosity ML1+4 (100 °C) of the masterbatch for foam molding of the present invention ranges from 15 to 90. The masterbatch having a viscosity beyond the range does not disperse well to result in nonuniform foaming and poor appearance of the molded products. The upper limit of the Mooney viscosity ML1+4 (100 °C) of the masterbatch for foam molding should preferably be 88, more preferably 85, further more preferably 80, yet further more preferably 75 and most preferably 70. On the other hand, the lower limit of the Mooney viscosity ML1+4 (100 °C) of the masterbatch for foam molding should preferably be 20, more preferably 25, further more preferably 30, yet further more preferably 35 and most preferably 40.

The specific gravity of the masterbatch for foam molding of the present invention is not specifically restricted and should preferably range from 0.60 to 1.5. The masterbatch having a specific gravity beyond the range can contain partially expanded or ruptured heat-expandable microspheres and lead to failure in manufacturing lightweight molded products. The upper limit of the specific gravity of the masterbatch should preferably be 1.3, more preferably 1.2 and further more preferably 1.1. On the other hand, the lower limit of the specific gravity of the masterbatch should preferably be 0.65, more preferably 0.70 and further more preferably 0.75. The specific gravity of the masterbatch for foam molding is determined in the method described in Example.

The foaming ratio of the masterbatch of the present invention is not specifically restricted and should preferably range from 5 times to 150 times. The masterbatch having a foaming ratio of lower than 5 times can result in low foaming of the molding composition and insufficient lightweight effect for the molded products. On the other hand, the masterbatch having a foaming ratio of higher than 150 times can cause poor appearance of the molded products because the heat-expandable microspheres expand not only in the inside of the products but also near the surface of the products. The upper limit of the foaming ratio of the masterbatch should preferably be 120 times, more preferably 100 times and further more preferably 80 times. On the other hand, the lower limit of the foaming ratio of the masterbatch should preferably be 10 times, more preferably 15 times and further more preferably 20 times. The foaming ratio of the masterbatch for foam molding is determined in the method described in Example.

The masterbatch for foam molding of the present invention can be produced into various forms, such as powder, granule, lump, strand, pellet and sheet.

The method for producing the masterbatch for foam molding of the present invention includes a step of mixing the material 1 containing a base resin and a liquid chemical compound and the material 2 containing heat-expandable microspheres wherein the base resin contains EPDM, and the masterbatch contains the heat-expandable microspheres in an amount ranging from higher than 300 parts by weight to 750 parts by weight to 100 parts by weight of the base resin and has a Moony viscosity ML1+4 (100 °C) ranging from 15 to 90. The method enables the production of the masterbatch for foam molding which minimally adheres to a molding machine, disperses well in a molding composition and is produced into a lightweight foam-molded product with high foaming ratio and good appearance.

The above-mentioned base resin containing EPDM and the liquid compound mentioned above are used to prepare the material 1.

The content of the liquid compound in the material 1 can be the maximum amount that can be contained in the material 1 or an amount lower than that. The content of the liquid compound in the material 1 is not specifically restricted and should preferably range from 40 parts by weight to 1000 parts by weight to 100 parts by weight of the base resin. The content of the liquid compound lower than 40 parts by weight can cause poor dispersion of the heat-expandable microspheres when the material 1 is mixed with the material 2. On the other hand, the content of the liquid compound higher than 1000 parts by weight can decrease the yield of the masterbatch. The upper limit of the content of the liquid compound should preferably be 800 parts by weight, more preferably 600 parts by weight and further more preferably 500 parts by weight. On the other hand the lower limit of the content of the liquid compound should be preferable in the order of (1) 80 parts by weight, (2) 100 parts by weight, (3) 150 parts by weight, (4) 180 parts by weight and (5) 200 parts by weight (where greater number indicates more preferable lower limit).

The material 1 can contain the above-mentioned lubricant, chemical foaming agent, stabilizer, filler, pigment and liquid rubber in addition to the base resin and liquid compound.

The preparation method of the material 1 is not specifically restricted and includes, for example, a method of mixing (mixing and kneading) a base resin containing EPDM with a predetermined Mooney viscosity, a liquid compound, and optionally the lubricant and others mentioned above. An oil-extended EPDM can be used in the preparation of the material 1.

A mixing machine, such as a roll mill, kneader, pressure kneader and Banbury mixer, can be used to prepare the material 1. The temperature for preparing the material 1 should preferably range from 50 °C to 100 °C.

The material 2 contains the above-mentioned heat-expandable microspheres and can contain the above-mentioned liquid compound, lubricant, chemical foaming agent, stabilizer, filler, pigment and liquid rubber. The heat-expandable microspheres can be wet powder containing a liquid, such as the liquid compound. The material 2 cannot contain base resins.

For preparing the material 2, a mixer, such as a ribbon mixer, countershaft rotor mixer, Henschel mixer, tumbler mixer, planetary mixer, Super Mixer, High Speed Mixer and SV Mixer, can be used.

The amount of the heat-expandable microspheres in the material 2 is not specifically restricted and should preferably be at least 30 wt%. The material 2 containing the heat-expandable microspheres in an amount lower than 30 wt% can decrease the production efficiency of the masterbatch. The upper limit of the amount of the heat-expandable microspheres in the material 2 should preferably be 100 wt%, more preferably 98 wt%, further more preferably 95 wt% and yet further more preferably 90 wt%. On the other hand, the lower limit of the amount of the heat-expandable microspheres in the material 2 should preferably be 40 wt%, more preferably 45 wt% and further more preferably 50 wt%.

The method for producing the masterbatch for foam molding of the present invention includes the step of mixing the material 1 and the material 2. The material 1 and the material 2 can be mixed by adding the material 2 to the material 1 or by adding the material 1 to the material 2. The material 1 and the material 2 can be mixed with the mixers mentioned above.

The temperature for mixing the material 1 and the material 2 should be lower than the expansion-starting temperature of the heat-expandable microspheres to prevent the expansion of the microspheres. Usually, the masterbatch can be produced at a temperature lower (preferably at least 5 °C lower) than the expansion-starting temperature of the heat-expandable microspheres not to expand the microspheres.

The masterbatch for foam molding can also be produced into a predetermined form, depending on its application, by processing the mixture of the material 1 and the material 2 prepared as described above with a machine, such as a roller mill, granulator, extruder and pelletizer. The mixture can also be produced into the masterbatch of a predetermined form in the same process as that mentioned above at a temperature lower (preferably at least 5 °C lower) than the expansion-starting temperature of the heat-expandable microspheres not to expand the microspheres.

Resin composition, foam-molded products and method for producing thereof

Foam-molded products are manufactured by molding a resin composition containing the masterbatch for foam molding and a matrix resin.

The matrix resin is not specifically restricted and includes, for example, polyvinyl chloride, polyvinylidene chloride; polyvinyl alcohol; ethylenic copolymers, such as ethylene-vinyl alcohol copolymer, ethylene-vinyl acetate copolymer, ethylene-methyl (meth)acrylate copolymer, ethylene-ethyl (meth)acrylate copolymer and ethylene-butyl (meth)acrylate copolymer; ionomers; polyolefin resins, such as low-density polyethylene, high-density polyethylene, polypropylene, polybutene, polyisobutylene, polystyrene and polyterpene; styrene copolymers, such as styrene-acrylonitrile copolymer and styrene-butadiene-acrylonitrile copolymer; polymethyl methacrylate; polycarbonate; polyester resins, such as polyethylene terephthalate and polybutylene terephthalate; polyamide resins, such as 6 nylon and 66nylon; thermoplastic polyurethane; tetrafluoroethylene; ionomer resins, such as ethylene ionomer, urethane ionomer, styrene ionomer and fluorine ionomer; polyacetal; thermoplastic resins, such as polyphenylene sulfide; thermoplastic elastomers, such as polyurethane elastomer, styrene elastomer, olefinic elastomer, polyamide elastomer and polyester elastomer; bioplastics, such as polylactic acid (PLA), cellulose acetate, polybutylene succinate (PBS), polyhydroxyalkanoate (PHA) and starch resins; and rubbers, such as EPDM (ethylene-propylene-diene copolymer rubber), ethylene-propylene rubber (EPR), natural rubber (NR), butadiene rubber (BR), styrene-butadiene rubber (SBR), isoprene rubber (IR), acrylonitrile-butadiene rubber (NBR), butyl rubber (IIR), chloroprene rubber (CR), acrylic rubber, urethane rubber, fluorine rubber and silicone rubber. One of or a combination of such resins can be used.

The amount of the heat-expandable microspheres in the resin composition is not specifically restricted and should preferably range from 0.01 wt% to 60 wt%. A resin composition containing the heat-expandable microspheres in an amount lower than 0.01 wt% can fail to make the resultant foam-molded products lightweight. On the other hand, a resin composition containing the heat-expandable microspheres in an amount higher than 60 wt% can cause remarkably low mechanical strength of the resultant foam-molded products though the products are lightweight enough. The upper limit of the amount of the heat-expandable microspheres should preferably be 50 wt%, more preferably 20 wt% and further more preferably 10 wt%. The lower limit of the amount of the heat-expandable microspheres should preferably be 0.1 wt%, more preferably 0.5 wt% and further more preferably 1 wt%.

The amount of the matrix resin in the resin composition is not specifically restricted and should preferably range from 40 wt% to 99.99 wt%. A resin composition containing the matrix resin in an amount lower than 40 wt% can cause remarkably low mechanical strength of the resultant foam-molded products though the products are lightweight enough. On the other hand, a resin composition containing the matrix resin in an amount higher than 99.99 wt% can fail to make the resultant foam-molded products lightweight. The upper limit of the amount of the matrix resin should preferably be 99.9 wt%, more preferably 99.5 wt% and further more preferably 99 wt%. The lower limit of the amount of the matrix resin should preferably be 50 wt%, more preferably 80 wt% and further more preferably 90 wt%.

The resin composition of the present invention can optionally contain the above-mentioned liquid compound, lubricant, stabilizer, filler, pigment and liquid rubber in combination with the masterbatch for foam-molding and matrix resin.

The resin composition can be molded by various techniques, such as injection molding, extrusion molding, blow molding, calendar molding, press molding, pneumatic molding and knead-molding. The injection molding includes the molding processes, for example, short-shot injection molding in which a part of a resin composition is injected and foamed in a mold and core-back injection molding in which a mold fully filled with a resin composition is enlarged to the volume required for foaming.

The heat-expandable microspheres in the resin composition expand thermally in molding operation, resulting in thermally expanded microspheres or hollow particles and thus the foam-molded products contain hollow particles.

The mean particle size of the hollow particles contained in foam-molded products is not specifically restricted and should preferably range from 1 pm to 1000 pm. Hollow particles with a mean particle size of smaller than 1 pm can result in insufficient lightweight effect. On the other hand, hollow particles with a mean particle size of larger than 1000 pm can decrease the strength of the foam-molded products. The upper limit of the mean particle size of hollow particles in foam-molded products should preferably be 500 pm, more preferably 300 pm and further more preferably 200 pm. On the other hand, the lower limit of the mean particle size of hollow particles in foam-molded products should preferably be 2 pm, more preferably 5 pm and further more preferably 10 pm.

The foaming ratio of the foam-molded products manufactured by molding a resin composition is not specifically restricted and should preferably be at least 1.1 times, more preferably ranging from 1.2 times to 5 times, further more preferably ranging from 1.4 times to 4 times and most preferably ranging from 1.5 times to 3 times. A foaming ratio of foam-molded products within the above range contributes to the manufacture of lightweight foam-molded products with sufficient strength.

The application of the foam-molded products of the present invention includes, for example, automotive parts, such as door trims, instrument panels, weatherstripping, glass run channel, bumpers and tires; shoe soles; building materials, such as wood powder plastic and flooring material; and artificial cork.

Example

The masterbatch for foam-molding of the present invention is specifically explained as follows, though the present invention is not restricted within the range of the following examples. In the following Examples and Comparative examples, "part(s)" means "part(s) by weight" and "%" means "wt%" unless otherwise specified. The properties of the heat-expandable microspheres described in the Examples of production and the properties of the masterbatches for foam molding and foam-molded products in the Examples and Comparative examples were measured and their performances were evaluated in the procedures described below. In the following description, heat-expandable microspheres may be simply referred to as "microspheres".

Mean particle size of heat-expandable microspheres

A Microtrac particle size analyzer (9320-HRA, manufactured by Nikkiso Co., Ltd.) was employed as the device for the determination and the $D_{50}$ was determined based on the volume of the heat-expandable microspheres and defined as the mean particle size.

Determination of expansion-starting temperature ($T_s$) and maximum expansion temperature ($T_{max}$) of heat-expandable microspheres

Those temperatures were determined with a DMA (DMA Q800, manufactured by TA Instruments). In an aluminum cup 4.8 mm deep and 6.0 mm in diameter (5.65 mm in inside diameter), 0.5 mg of heat-expandable microspheres were placed, and the cup was covered with an aluminum cap (5.6 mm in diameter and 0.1 mm thick) to be prepared as a sample. The sample was set on the device and subjected to the pressure of 0.01 N with the compression unit of the device, and the height of the sample was measured. The sample was then heated at the temperature levels elevating at a rate of 10 °C/min within the temperature range from 20 °C to 300 °C, being subjected to the pressure of 0.01 N with the compression unit, and the vertical change of the position of the compression unit was measured. The temperature at which the compression unit started to change its position to the positive direction was determined as the expansion-starting temperature ($T_s$), and the temperature at which the compression unit indicated the highest position ($H_{max}$) was determined as the maximum expansion temperature ($T_{max}$).

Specific gravity of a masterbatch for foam molding

The specific gravity of a masterbatch for foam molding was determined by an analytical electronic balance AX200 (manufactured by Shimadzu Corporation) with the specific gravity measurement mode for solid substance.

Mooney viscosity ML1+4 (100 °C) of a masterbatch for foam molding

The Mooney viscosity of a masterbatch was measured with a Mooney viscometer (SMV-301, manufactured by Shimadzu Corporation) at 100 °C according to the procedure of JIS K-6300.

Dispersibility of a masterbatch for foam molding

The dispersibility of a masterbatch for foam molding was confirmed by visual inspection of agglomerates in the masterbatch which was processed into a 0.35-mm thick round sheet of 70 mm in diameter with a table-top test press (SA-302, manufactured by Tester Sangyo Co., Ltd.).
The confirmed dispersibility of the masterbatch for foam molding was evaluated according to the following criteria and the results of A to C were judged to be acceptable.

    A: no agglomerates found
    B: 1 to 3 agglomerates found
    C: 4 to 5 agglomerates found
    D: at least 6 agglomerates found

Adhesion of a masterbatch for foam molding

A Labo Plastomill (ME-25, single screw extruder, manufactured by Toyo Seiki Seisaku-sho, Ltd.) and a T-die (150-mm lip width and 2-mm lip thickness) were used for the testing. The temperature of the extruder and T die was adjusted at 80 °C and the screw rotational speed was adjusted at 40 rpm. A masterbatch for foam molding processed into cubes (3 to 4 mm wide, 3 to 4 mm long and 3 to 4 mm deep) was fed to the Labo Plastomill and extrusion molding was performed for 10 minutes. Stability of the extrusion molding was evaluated by checking whether the extrusion rate was constant and the masterbatch did not adhere to the screw below the hopper of the mill.
The adhesion of the masterbatch to the screw of the extruder was evaluated according to the following criteria and the results of A and B were judged to be acceptable.

    A: constant extrusion rate without masterbatch adhesion to the screw below the hopper
    B: constant extrusion rate with slight masterbatch adhesion to the screw below the hopper
    C: disturbed extrusion with masterbatch adhesion to the screw below the hopper

Specific gravity of foam-molded products

The specific gravity of foam-molded products was determined by an analytical electronic balance AX200 (manufactured by Shimadzu Corporation) with the specific gravity measurement mode for solid substance.

Appearance of foam-molded products

The appearance of foam-molded products was evaluated by measuring their surface roughness (Rz) with a 3-D shape measuring instrument (VR-3000, manufactured by Keyence Corporation) and classifying the results according to the following criteria. The results of A and B were judged to be acceptable.

    A: Rz < 30 pm
    B: 30 $\mu$m $\leq$ Rx < 50 pm
    C: 50 $\mu$m $\leq$ Rx $\leq$ 100 pm
    D: Rz > 100 pm

Distribution of pores in foam-molded products

The distribution of the pores in a foam-molded product was checked by visually inspecting the cross section of the foam-molded product through electron microscope (VE-8800, manufactured by Keyence Corporation) and evaluated according to the following criteria.

A: pores evenly distributed
B: pores unevenly distributed

Example of production 1

An aqueous dispersion medium was prepared by adding 150 g of sodium chloride, 80 g of colloidal silica containing 20 wt% of silica, 1.5 g of polyvinylpyrrolidone and 0.5 g of ethylenediaminetetraaceticacid tetrasodiumsalt in 600 g of deionized water and by adjusting the pH of the mixture within the range from 2.0 to 3.5.

An oily mixture was prepared by mixing 140 g of acrylonitrile, 56 g of methacrylonitrile, 2 g of methyl methacrylate, 2 g of PEG (200) diacrylate, 30 g of 2-methylpropane, 20 g of 2-methylbutane and 3 g of 2,2'-azobis(2,4-dimethylvaleronitrile).

The aqueous dispersion medium and the oily mixture were mixed and the mixture was dispersed with a Homomixer to be prepared into a suspension. The suspension was transferred to a compressive reactor of 1.5-liter capacity, purged with nitrogen, and polymerized at 60 °C for 20 hours with agitation under the initial reaction pressure of 0.3 MPa. The resultant polymerization product was filtered and dried to be prepared into the heat-expandable microspheres 1 (Microspheres 1). The properties of the heat-expandable microspheres are shown in Table 1

Examples of production 2 and 3

In the Examples of production 2 and 3, the heat-expandable microspheres 2 and 3 (Microspheres 2 and 3) were produced in the same manner as in Example of production 1 except that the different conditions and parameters shown in Table 1 were employed for the polymerization. The properties of the microspheres were evaluated and are shown in Table 1.

Table 1

|  |  | Example of production 1 | Example of production 2 | Example of production 3 |
|---|---|---|---|---|
|  |  | Microspheres 1 | Microspheres 2 | Microspheres 3 |
| Aqueous dispersion medium (g) | Deionized water | 600 | 600 | 600 |
|  | Sodium chloride | 150 | 150 | 150 |
|  | Colloidal silica | 80 | 65 | 55 |
|  | Polyvinylpyrrolidone | 1.5 | 1 | 1 |
|  | Ethylenediaminetetraaceticacid tetrasodiumsalt | 0.5 | 0.5 | 0.5 |

(continued)

|  | | | Example of production 1 | Example of production 2 | Example of production 3 |
| --- | --- | --- | --- | --- | --- |
|  | | | Microspheres 1 | Microspheres 2 | Microspheres 3 |
| Oily mixture (g) | Polymerizable component | Acrylonitrile | 140 | 140 | 40 |
|  | | Methacrylonitrile | 56 | 56 | 108 |
|  | | Methyl methacrylate | 2 | 2 | 10 |
|  | | Methacrylic acid |  |  | 40 |
|  | | PEG (200) diacrylate | 2 | 2 | 2 |
|  | Blowing agent | 2-methylpropene | 30 |  | 24 |
|  | | 2-methylbutane | 20 | 50 |  |
|  | | 2,2,4-trimethylpentane |  |  | 26 |
|  | Polymerization initiator | 2,2'-azobis(2,4-dimethylvaleronitrile) | 3 | 3 | 3 |
| Properties of heat-expandable microspheres | | Mean particle size (pm) | 9 | 16 | 23 |
|  | | Expansion starting temperature (°C) | 95 | 112 | 140 |
|  | | Maximum expansion temperature (°C) | 134 | 160 | 186 |

Example 1

The material 1 was prepared by kneading 200 parts by weight of EPDM 1 (containing 100 parts by weight of EPDM and 100 parts by weight of an extender oil), 150 parts by weight of PW-90 (a process oil, manufactured by Idemitsu Kosan Co., Ltd.) and 10 parts by weight of stearic acid with a kneader until the temperature of the mixture reached to 60 °C. Microspheres 1 was added to the material 1 and the mixture was kneaded at 60 °C for 3 minutes to be prepared into a mixture containing the base resin and heat-expandable microspheres. The resultant mixture was mixed again with a roller mill at 60 °C and 20 r.p.m. roller speed for 3 minutes with 1-cm gap between the rollers to be produced into a 1-cm thick masterbatch for foam molding. The Mooney viscosity of the resultant masterbatch was 71 and its specific gravity was 0.89.

Then a matrix composition was prepared by mixing 100 parts by weight of EPDM (containing 63 wt% of ethylene and 4.4 wt% of diene), 250 parts by weight of heavy calcium carbonate, 64 parts by weight of paraffin oil, 15 parts by weight of stearic acid, 5 parts by weight of zinc oxide, 1 part by weight of carbon black, 1 part by weight of sulfur and 4 parts by weight of vulcanization accelerator.

A resin composition was prepared by mixing 2 parts by weight of the masterbatch for foam-molding and 100 parts by weight of the matrix composition. The resin composition was fed to the hopper of an extruder to be kneaded and extrusion-molded into a board-shaped mold product. The extrusion temperature was adjusted at 80 °C. The board-shaped molded product from the extrusion molding was vulcanized in a vulcanization furnace at 200 °C for 5 minutes to be processed into a foam-molded product. The properties of the foam-molded product are shown in Table 2.

Examples 2 to 12 and Comparative examples 1 to 4

Masterbatches for foam-molding and foam-molded products were produced in the same manner as that of Example 1 except that the variants and amounts of the ingredients and components were changed as shown in Table 2 and 3. The properties of the masterbatches and molded products were measured and evaluated and the results are shown in Tables 2 and 3.

Table 2

| | | | Examples | | | | | | | |
|---|---|---|---|---|---|---|---|---|---|---|
| | | | 1 | 2 | 3 | 4 | 5 | 6 | 7 | 8 |
| Masterbatch for foam molding | Heat-expandable microspheres | Variant | Microsphere 1 | Microsphere 1 | Microsphere 1 | Microsphere 1 | Microsphere 1 | Microsphere 1 | Microsphere 2 | Microsphere 2 |
| | | Amount (part) | 500 | 500 | 500 | 500 | 305 | 740 | 500 | 500 |
| | Base resin | EPDM 1 (part) | 100 | | | | | | | 100 |
| | | EPDM 2 (part) | | 100 | | | 100 | 100 | 100 | |
| | | EPDM 3 (part) | | | 100 | | | | | |
| | | EPDM 4 (part) | | | | 100 | | | | |
| | Liquid compound | Extender oil (part) | 100 | | | | | | | 100 |
| | | PW-90 (part) | 150 | 250 | 250 | 250 | 250 | 250 | 250 | 150 |
| | Lubricant | Stearic acid (part) | 10 | 10 | 10 | 10 | 10 | 10 | 10 | 10 |
| Properties of masterbatch | Specific gravity | | 0.89 | 0.88 | 0.93 | 0.9 | 0.91 | 0.88 | 0.92 | 0.85 |
| | Mooney viscosity ML(1+4)(100°C) | | 71 | 64 | 68 | 55 | 64 | 87 | 75 | 68 |
| | Dispersibility | | A | A | A | A | A | C | A | A |
| | Adhesion to molding machine | | A | A | A | B | B | B | A | A |
| Properties of foam-molded product | Amount of masterbatch to 100 parts by weight of matrix resin | | 2 | 2 | 2 | 2 | 2 | 2 | 2 | 2 |
| | Specific gravity of foam-molded product | | 0.79 | 0.82 | 0.85 | 0.84 | 0.93 | 0.69 | 0.85 | 0.83 |
| | Appearance of foam-molded product | | A | A | A | A | A | B | A | A |
| | Pore distribution in foam-molded product | | A | A | A | A | A | A | A | A |

Table 3

| | Examples | | | | Comparative examples | | | |
|---|---|---|---|---|---|---|---|---|
| | 9 | 10 | 11 | 12 | 1 | 2 | 3 | 4 |

| | Heat-expandable microspheres | Variant | Microsphere 2 | Microsphere 3 | Microsphere 3 | Microsphere 3 | Microsphere 1 | Microsphere 1 | Microsphere 1 | Microsphere 1 |
|---|---|---|---|---|---|---|---|---|---|---|
| Masterbatch for foam molding | | Amount (part) | 500 | 500 | 500 | 500 | 200 | 760 | 500 | 500 |
| | Base resin | EPDM 1 (part) | | 100 | | 30 | | | | |
| | | EPDM 2 (part) | 60 | | | | 100 | 100 | 100 | 100 |
| | | EPDM 3 (part) | 40 | | | | | | | |
| | | EPDM 4 (part) | | | 100 | 70 | | | | |
| | Liquid compound | Extender oil (part) | | 100 | | 30 | | | | |
| | | PW-90 (part) | 250 | 150 | 250 | 220 | 100 | 250 | 500 | 0 |
| | Lubricant | Stearic acid (part) | 10 | 10 | 10 | 10 | 10 | 10 | 10 | 10 |
| Properties of masterbatch | Specific gravity | | 0.84 | 0.88 | 0.87 | 0.88 | 0.95 | 0.99 | 0.80 | Could not be manufactured |
| | Mooney viscosity ML(1+4)(100°C) | | 70 | 68 | 51 | 56 | 42 | 95 | 14 | |
| | Dispersibility | | A | A | B | B | C | D | D | |
| | Adhesion to molding machine | | A | A | B | B | D | A | D | |
| Properties of foam-molded product | Amount of masterbatch to 100 parts by weight of matrix resin | | 2 | 2 | 2 | 2 | 2 | 2 | 2 | |
| | Specific gravity of foam-molded product | | 0.86 | 0.82 | 0.77 | 0.77 | 0.97 | 0.65 | 0.98 | |
| | Appearance of foam-molded product | | A | B | B | B | C | D | C | |
| | Pore distribution in foam-molded product | | A | A | A | A | A | B | B | |

The detail of the materials used in Examples and Comparative examples of the present invention is shown in Table 4.

Table 4

| Name | Ethylene content (wt%) | Diene content (wt%) | Mooney viscosity ML (1+4)(100°C) | Note |
|---|---|---|---|---|
| EPDM 1 | 66 | 4 | 63 | Mixture of 100 parts by weight of EPDM and 100 parts by weight of an extender oil |
| EPDM 2 | 62 | 3 | 55 | |
| EPDM 3 | 55 | 2.3 | 60 | |

(continued)

| Name | Ethylene content (wt%) | Diene content (wt%) | Mooney viscosity ML (1+4)(100°C) | Note |
|---|---|---|---|---|
| EPDM 4 | 47 | 9.5 | 32 | |

As shown in Tables 2 and 3, the masterbatches for foam molding of the present invention described in Examples, which contain 100 parts by weight of a base resin containing EPDM and the heat-expandable microspheres in an amount ranging from higher than 300 parts by weight to 750 parts by weight and have a Mooney viscosity ML1+4 (100°C) ranging from 15 to 90, exhibit minimum adhesion to a molding machine and good dispersibility in a molding composition and enable the manufacture of lightweight foam-molded products with high foaming and good appearance.

On the other hand, the masterbatches for foam molding described in Comparative examples 1 to 3, which contain the heat-expandable microspheres in an amount beyond the above-mentioned range and have a Mooney viscosity ML1+4 (100°C) beyond the above-mentioned range cannot solve at least one of the problems of the present invention, i.e., minimum adhesion to a molding machine, good dispersibility in a molding composition, and manufacture of lightweight foam-molded products with high foaming and good appearance.

In addition, the masterbatch cannot be produced in a method without the step of mixing the material 1 and material 2 as that of Comparative example 4.

Industrial Applicability

The masterbatch of the present invention can be used in foam molding process including injection molding, extrusion molding and press molding to manufacture foam-molded products with good sealing performance, sound insulation property, thermal insulation property, heat shielding property and sound absorption property.

**Claims**

1. A masterbatch for foam molding comprising a base resin and heat-expandable microspheres;
   wherein the base resin contains EPDM;

   the masterbatch contains the heat-expandable microspheres in an amount ranging from higher than 300 parts by weight to 750 parts by weight to 100 parts by weight of the base resin;
   and the masterbatch has a Moony viscosity ML 1+4 (100 °C) ranging from 15 to 90.

2. The masterbatch according to Claim 1, wherein the EPDM contains 45 wt% to 72 wt% of ethylene.

3. The masterbatch according to Claim 1 or 2, wherein the EPDM contains 2.2 wt% to 10.0 wt% of diene.

4. The masterbatch according to any one of Claims 1 to 3,
   wherein the heat-expandable microspheres contain a thermoplastic resin shell and a thermally vaporizable blowing agent encapsulated therein;
   and the thermoplastic resin is a polymer of a polymerizable component containing at least one selected from the group consisting of acrylonitrile, methacrylonitrile and vinylidene chloride.

5. A method for producing a masterbatch for foam molding, the method including a step of mixing a material 1 containing a base resin and a liquid chemical compound and a material 2 containing heat-expandable microspheres;
   wherein the base resin contains EPDM;

   the masterbatch contains the heat-expandable microspheres in an amount ranging from higher than 300 parts by weight to 750 parts by weight to 100 parts by weight of the base resin;
   and the masterbatch has a Moony viscosity ML1+4 (100 °C) ranging from 15 to 90.

6. A resin composition comprising the masterbatch for foam molding according to any one of Claims 1 to 4 and a matrix resin.

7. A foam-molded product manufactured by molding the resin composition according to Claim 6.

## INTERNATIONAL SEARCH REPORT

| International application No. |
|---|
| PCT/JP2021/022778 |

**A. CLASSIFICATION OF SUBJECT MATTER**
C08J 3/22(2006.01)i; C08K 7/22(2006.01)i; C08L 23/16(2006.01)i; C08L 101/00(2006.01)i; C09K 3/00(2006.01)i; C08J 9/32(2006.01)i
FI:     C08J3/22 CES; C08J9/32; C09K3/00 111B; C08L23/16; C08L101/00; C08K7/22

According to International Patent Classification (IPC) or to both national classification and IPC

**B. FIELDS SEARCHED**

Minimum documentation searched (classification system followed by classification symbols)
C08J3/22; C08K7/22; C08L23/16; C08L101/00; C09K3/00; C08J9/32

Documentation searched other than minimum documentation to the extent that such documents are included in the fields searched
| Published examined utility model applications of Japan | 1922-1996 |
| Published unexamined utility model applications of Japan | 1971-2021 |
| Registered utility model specifications of Japan | 1996-2021 |
| Published registered utility model applications of Japan | 1994-2021 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 11-43551 A (TOYO TIRE AND RUBBER CO., LTD.) 16 February 1999 (1999-02-16) claims, paragraphs [0009]-[0012], examples | 1-7 |
| Y | JP 2019-131703 A (INOAC CORP.) 08 August 2019 (2019-08-08) claims, paragraph [0025], examples | 1-7 |
| Y | JP 6523576 B1 (SEKISUI CHEMICAL CO., LTD.) 05 June 2019 (2019-06-05) claims, examples | 2-3, 5 |

☐ Further documents are listed in the continuation of Box C.     ☒ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| 31 August 2021 (31.08.2021) | 07 September 2021 (07.09.2021) |

| Name and mailing address of the ISA/ | Authorized officer |
|---|---|
| Japan Patent Office | |
| 3-4-3, Kasumigaseki, Chiyoda-ku, | |
| Tokyo 100-8915, Japan | Telephone No. |

Form PCT/ISA/210 (second sheet) (January 2015)

INTERNATIONAL SEARCH REPORT

Information on patent family members

International application No.

PCT/JP2021/022778

| Patent Documents referred in the Report | Publication Date | Patent Family | Publication Date |
|---|---|---|---|
| JP 11-43551 A | 16 Feb. 1999 | (Family: none) | |
| JP 2019-131703 A | 08 Aug. 2019 | (Family: none) | |
| JP 6523576 B1 | 05 Jun. 2019 | US 2020/0262996 A1 claims, examples | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 6523576 B